# EUROPÄISCHE PATENTANMELDUNG

(11) **EP 3 109 118 A2**
(43) Veröffentlichungstag der Anmeldung: **28.12.2016**
(21) Anmeldenummer: 16174753.0
(22) Anmeldetag: 16.06.2016
(51) Int. Cl.: B60W 50/08, B60W 30/09

(54) **VERFAHREN ZUM BETRIEB EINES FAHRERASSISTENZSYSTEMS EINES KRAFTFAHRZEUGS UND KRAFTFAHRZEUG**

(30) Priorität: 24.06.2015 DE 102015008150
(71) Anmelder: AUDI AG, 85045 Ingolstadt (DE)
(72) Erfinder: Maiwald, Stefan, 85055 Ingolstadt (DE); Al Haddad, Christian, 85049 Ingolstadt (DE)

(57) **Zusammenfassung**

Verfahren zum Betrieb eines Fahrerassistenzsystems (6) eines Kraftfahrzeugs (5), wobei durch ein den Fahrer und/oder die Fahrsituation betreffende Sensordaten und/oder Betriebsdaten (2, 4) des Kraftfahrzeugs (5) auswertendes Schreckkriterium ein Schreckzustand des Fahrers des Kraftfahrzeugs (5) erkannt wird, wobei bei Vorliegen eines Schreckzustandes wenigstens eine die Sicherheit des Fahrzeugbetriebs erhöhende und/oder aufrechterhaltende Maßnahme durchgeführt wird.

## Beschreibung

Die Erfindung betrifft ein Verfahren zum Betrieb eines Fahrerassistenzsystems eines Kraftfahrzeugs und ein Kraftfahrzeug.

Es wurden im Stand der Technik bereits Fahrerassistenzsysteme vorgeschlagen, die durch Beobachtung des Fahrers und/oder von dessen Fahrverhalten, also Auswertung entsprechender Sensor- und/oder Betriebsdaten des Kraftfahrzeugs, auf den Zustand des Fahrers rückschließen und entsprechende Maßnahmen einleiten können. Vorgeschlagen wurde in diesem Kontext insbesondere, eine Müdigkeit und/oder die Aufmerksamkeit des Fahrers anhand solcher Eingangsdaten zu beurteilen. Beispielsweise wurden Bildverarbeitungsalgorithmen bekannt, die den Kopf, insbesondere das Gesicht, des Fahrers, wie es mit einer Innenraumkamera aufgenommen wurde, analysieren, um Müdigkeit zu erkennen und/oder die Blickrichtung des Fahrers zu beurteilen. Weitere Hinweise auf mögliche Müdigkeit des Fahrers lassen sich aus dem allgemeinen Fahrverhalten, insbesondere der Charakteristik von Bedienelementbetätigungen, beispielsweise Lenkradbetätigungen und/oder Pedalbetätigungen, ableiten. Weist das Kraftfahrzeug ein Spurhalteassistenzsystem auf, kann auch beurteilt werden, wie genau der Fahrer der aktuellen Fahrspur folgt, woraus ein Hinweis auf dessen Müdigkeit/Aufmerksamkeit abgeleitet werden kann. Als Maßnahmen bei einer erkannten Müdigkeit/Unaufmerksamkeit wurde beispielsweise vorgeschlagen, optische und/oder akustische Warnsignale auszugeben, wobei dies gestaffelt nach Stärke der Müdigkeit/Unaufmerksamkeit erfolgen kann. Beispielsweise kann zunächst an der Instrumententafel eine Kaffeetasse aufleuchten, wenn eine leichte Müdigkeit erkannt wird, wobei bei stärkerer Müdigkeit ein optisches und/oder akustisches Warnsignal folgen kann.

Jedoch ist Müdigkeit/Unaufmerksamkeit nicht das einzige Charakteristikum, welches ein Fahrer aufweisen kann, wenn er auf nützliche Art und Weise Unterstützung durch Fahrerassistenzsysteme erhalten könnte. Es besteht diesbezüglich mithin Verbesserungsbedarf.

Der Erfindung liegt daher die Aufgabe zugrunde, ein die Sicherheit im Kraftfahrzeug weiter zu erhöhendes Fahrerassistenzsystem anzugeben.

Zur Lösung dieser Aufgabe ist bei einem Verfahren der eingangs genannten Art erfindungsgemäß vorgesehen, dass durch ein den Fahrer und/oder die Fahrsituation betreffende Sensordaten und/oder Betriebsdaten des Kraftfahrzeugs auswertendes Schreckkriterium ein Schreckzustand des Fahrers des Kraftfahrzeugs erkannt wird, wobei bei Vorliegen eines Schreckzustandes wenigstens eine die Sicherheit des Fahrzeugbetriebs erhöhende und/oder aufrechterhaltende Maßnahme durchgeführt wird.

Erfindungsgemäß wurde erkannt, dass Situationen, in denen der Fahrer erschreckt, besonders kritisch sein können, da durch den Schreck die Fahrtüchtigkeit des Fahrers für eine oder mehrere Sekunden eingeschränkt werden kann. Dabei sind grundsätzlich eine Vielzahl von Schrecksituationen denkbar, wobei das Schreckkriterium bevorzugt sowohl auf die Detektion der Schrecksituation als solche als auch auf das Erkennen von deren Auswirkungen beim Fahrer abzielt. Schrecksituationen lassen sich beispielsweise klassifizieren in unvorhergesehene externe Ereignisse, unvorhergesehene interne Ereignisse, körperliche Ereignisse beim Fahrer, Ermüdung/Halbschlaf des Fahrers mit plötzlichem Aufwachen von selbst oder durch Warnungen sowie durch sonstige Fahrerassistenzsysteme ausgelöste Effekte, insbesondere Fahrübernahmeaufforderungen. Unvorhergesehene externe Ereignisse können dabei beispielsweise durch Umfelddaten von Umfeldsensoren als Sensordaten detektiert werden. Sie können plötzlich auftauchende Lebewesen auf der Fahrbahn (beispielsweise Tiere, Kinder), Fehlverhalten anderer Verkehrsteilnehmer, Hupen, das Geräusch eines Martinhorns, Fahrbahnschäden, Gegenstände auf der Fahrbahn, wehende Tüten, Reifenplatzer eines anderen Verkehrsteilnehmers, Steinschlag auf die Windschutzscheibe und dergleichen umfassen. Unvorhergesehene interne Ereignisse können beispielsweise durch Innenraumdaten von Innenraumsensoren des Kraftfahrzeugs als Sensordaten erfasst werden. Beispiele hierfür sind schreiende Kinder, ein zu lautes Aufdrehen der Musik durch einen anderen Insassen, eine herunterfallende Zigarette, eine Wespe oder ein sonstiges Insekt in Kraftfahrzeugen, eine Waschwasserwarnung, ein klingelndes Mobiltelefon und dergleichen.

Körperliche Ereignisse beim Fahrer, die zum Erschrecken führen können, sind beispielsweise Niesen und/oder Krämpfe. Derartige Auslöser für Schrecksituationen können beispielsweise auch durch Innenraumdaten von Innenraumsensoren als Sensordaten erfasst werden, wobei durchaus auch denkbar ist, biometrische Sensoren einzusetzen und deren Sensordaten auszuwerten.

Schließlich können Schrecksituationen auch durch andere Fahrzeugsysteme ausgelöst werden, insbesondere dann, wenn ein anderes Fahrerassistenzsystem, insbesondere ein Fahrzeugführungssystem, wie ein Staupilot, eine Geschwindigkeitsregelanlage und dergleichen, aufgrund des Erreichens einer Systemgrenze (einscherendes Fahrzeug oder dergleichen) eine Fahrübernahmeaufforderung ausgibt, während der Fahrer jedoch unkonzentriert war und die Verkehrssituation unzureichend beobachtet hat. Dies überfordert ihn im ersten Moment, was auch eine Schrecksituation zur Folge haben kann.

Mithin wird im Rahmen der vorliegenden Erfindung vorgeschlagen, anhand von Sensoren und/oder sonstiger Betriebsdaten des Kraftfahrzeugs einen Schreckzustand des Fahrers zu erkennen und diese medizinische/psychische Situation des Fahrers in die Entscheidungsfindung mit einzubeziehen. Dabei sind verschiedene konkrete Maßnahmen denkbar, um den Fahrer in einem Schreckzustand insbesondere in dem Sinne zu unterstützen, dass die Schrecksekunde zur Erhöhung und/oder Aufrechterhaltung der Sicherheit des Kraftfahrzeugs sozusagen durch die automatisch durchgeführten Maßnahmen überbrückt wird. Beispielsweise kann vorgesehen sein, dass als Maßnahme wenigstens ein Betriebsparameter wenigstens eines Fahrzeugsystems zur Unterstützung des Beseitigens und/oder Wahrnehmens einer kritischen Fahrsituation angepasst wird und/oder ein die Sicherheit des Kraftfahrzeugs erhöhender und/oder aufrechterhaltender Fahreingriff vorgenommen wird und/oder ein fahrerseitig aufgrund einer Bedieneingabe erfolgender Fahreingriff unterdrückt oder modifiziert wird und/oder wenigstens ein Bedienelement des Kraftfahrzeugs für Bedieneingaben des Fahrers gesperrt wird.

Nachdem mithin ohne die Schreckerkennung grundsätzlich von der ständigen lückenlosen Fahrtüchtigkeit des Fahrers ausgegangen werden muss und Aktionen des Fahrers umgesetzt werden, auch wenn diese die Situation ungünstig beeinflussen, kann die erfindungsgemäß vorgesehene Schreckerkennung es ermöglichen, eine kurzfristige Fahruntüchtigkeit zu erkennen und einen sicheren Fahrzustand herzustellen beziehungsweise zu erhalten. Insbesondere ist es jedoch auch denkbar, insbesondere bei der Parametrierung von weiteren Fahrzeugsystemen, die gesamte Reaktionsgeschwindigkeit des Fahrers zu steigern, indem die schnelle Reaktion auf den Schreckzustand die folgende Reaktion des Fahrers vorbereitet und forciert. Eine "Schrecksekunde" mit korrekter, aber verzögerter Aktion des Fahrers kann durch das Fahrerassistenzsystem überbrückt werden. Dabei ist es, wie bereits erwähnt, besonders bevorzugt, wenn Sensordaten des Fahrers selbst auf das Vorliegen eines Schreckzustands überprüft werden, da somit auch dann adäquat reagiert werden kann, wenn nur der Fahrer, nicht aber die Sensorik des Kraftfahrzeugs eine kritische Situation erkennt.

Mithin sieht eine besonders vorteilhafte Ausgestaltung der vorliegenden Erfindung vor, dass durch das Schreckkriterium als Sensordaten die Bilddaten einer auf das Gesicht eines Fahrers gerichteten Innenraumkamera ausgewertet werden, insbesondere unter Benutzung eines ein Gesicht als erschreckt klassifizierenden und/oder kritische Situationen und/oder Zustände des Fahrers erkennenden Bildverarbeitungsalgorithmus. Es können mithin Bilddaten einer Innenraumkamera, die den Fahrer beobachtet, als Sensordaten ausgewertet werden, wobei im Stand der Technik bereits eine Vielzahl von Bildverarbeitungsalgorithmen bekannt sind, die die Mimik eines in Bilddaten enthaltenen Gesichts interpretieren und klassifizieren können. Auch für ein typisches "Schreckgesicht" in einem Schreckzustand existieren typische, bei Menschen vorliegende Merkmale, beispielsweise schreckgeweitete Augen, die durch entsprechende Bildverarbeitungsalgorithmen detektiert und interpretiert werden können, um insbesondere durch Korrelation verschiedener Merkmale eine Klassifizierung eines Gesichts des Fahrers als "erschreckt" ermöglichen zu können. Auch Bilddaten hinsichtlich des Gesamtkörpers des Fahrers können ausgewertet werden, beispielsweise, wenn durch Schreck eine Art Verkrampfung auftritt, die in den Bilddaten erkennbar ist. Für im Stand der Technik bekannte Beispiele von Bildverarbeitungsalgorithmen, die Stimmungen von Menschen erkennen können, sei lediglich beispielhaft auf eine "Lächelerkennung" verwiesen, wie sie in modernen Fotoapparaten eingesetzt wird.

Andererseits ist es selbstverständlich auch vorteilhaft denkbar, die Schrecksituation selbst feststellen zu können. So kann vorgesehen sein, dass durch das Schreckkriterium als Sensordaten die Fahrsituation innerhalb und/oder außerhalb des Kraftfahrzeugs im vom Fahrer wahrnehmbaren Bereich beschreibende und/oder als Betriebsdaten als das Ergebnis einer Fahrsituationsanalyse gewonnene Situationsdaten ausgewertet werden. Auf diese Weise können beispielsweise auftretende Objekte, Kinder, die auf die Straße laufen, plötzlich einscherende andere Verkehrsteilnehmer und dergleichen als Schrecksituation klassifiziert werden. Dabei ist die Erkennung und Klassifizierung von Fahrsituationen, insbesondere von kritischen Fahrsituationen, grundsätzlich bereits bekannt, so dass das entsprechende Wissen auch im Rahmen der vorliegenden Erfindung angewendet werden kann, um Anpassungen bekannter Situationsanalysealgorithmen vorzunehmen, so dass Schrecksituationen, die zu Schreckzuständen beim Fahrer führen können. Insbesondere können Fahrsituationsanalyse-Algorithmen insoweit modifziert werden, dass sie als zusätzliches Klassifikationsergebnis ein Zusatzattribut ausgeben, das beschreibt, ob eine zu einem Schreckzustand beim Fahrer führende Situation vorliegend kann. Dabei ist es bevorzugt, derartige Fahrsituationsanalyseergebnisse mit einem Schreckzustand beim Fahrer unmittelbar detektierenden Ergebnissen zu korrelieren, um die letztlich erforderliche Gesamtbeurteilung als Schreckzustand vornehmen zu können. Es sei noch angemerkt, dass selbstverständlich Fahrsituationsanalysen auch auf das Innere des Kraftfahrzeugs angewendet werden können, wenn dieses durch entsprechende, insbesondere optische und/oder akustische Sensoren überwacht wird.

In einer weiteren Ausgestaltung der Erfindung können durch das Schreckkriterium als Betriebsdaten eine aktuell auszugebende Fahrübernahmeaufforderung wenigstens eines zur wenigstens teilweise automatischen Querund/oder Längsführung des Kraftfahrzeugs ausgebildeten Fahrzeugführungssystems beschreibende Fahrübernahmedaten ausgewertet werden. Nutzt der Fahrer ihn bei der Fahrzeugführung unterstützende Fahrzeugführungssysteme, ist er selbst weniger in die Fahrzeugführung involviert, was zu Ablenkung und/oder Unaufmerksamkeit führen kann, so dass eine Fahrübernahmeaufforderung, beispielsweise dann, wenn eine Systemgrenze erreicht ist, auch zu einem kurzzeitigen Erschrecken des Fahrers, also einem Schreckzustand, führen kann. Auch diesbezüglich kann das erfindungsgemäße Verfahren mithin eine geeignete, vorteilhafte Unterstützung des Fahrers bieten.

Selbstverständlich sind neben den hier genannten Beispielen auch eine Vielzahl anderer im Kraftfahrzeug vorliegender Sensordaten und/oder Betriebsdaten denkbar, die einen Hinweis auf eine Schrecksituation und mithin auch einen Schreckzustand des Fahrers geben können. Allerdings wird es erfindungsgemäß bevorzugt, wenn auf die Bedientätigkeit des Fahrers gerichtete Betriebsdaten nicht ausschließlich herangezogen werden, um einen Schreckzustand des Fahrers zu detektieren, da es sich durchaus um eine gewollte Fahrereingabe handeln kann. Mithin kann vorgesehen sein, dass als ein Teilkriterium des Schreckkriteriums, dessen Erfüllung nicht alleine zur Erfüllung des Schreckkriteriums ausreicht, Betriebsdaten des Kraftfahrzeugs auf das Vorliegen einer ruckartigen Bedienaktion seitens des Fahrers überprüft werden. Beispielsweise kann in diesem Kontext vorgesehen sein, dass die Betätigung der Pedalerie und/oder des Lenkrads auf ruckartige Bedienaktionen überprüft werden. Eine ruckartige Bedienaktion wird dabei durch unterschiedliche Aspekte beschrieben, bei denen eine große Veränderung über eine kurze Zeitspanne gegeben ist. Beispielsweise können, um eine Bedienaktion als ruckartig zu klassifizieren, Schwellwerte für den Gradienten, beispielsweise also die Geschwindigkeit einer Pedalbetätigung, und/oder eine Mindeststärke der Änderung vorgesehen sein. Dabei ist es, wie bereits erwähnt, bevorzugt, wenigstens ein zusätzliches Teilkriterium als erfüllt zu fordern, insbesondere eine Gesichtserkennung, um bei einer ruckartigen Bedienaktion tatsächlich auf einen Schreckzustand zu schließen. Findet eine ruckartige Bedienaktion ohne einen Schreckzustand statt, verbleibt die volle Fahrzeugkontrolle beim Fahrer. Dann kann angenommen werden, dass dieser ein spontanes Fahrmanöver beabsichtigt, beispielsweise einen Überholvorgang, eine späte Kursänderung, eine gekonnte Reaktion auf ein Ereignis und dergleichen. Erst wenn weitere, insbesondere vom Fahrer selbst gewonnene Daten auf einen Schreckzustand des Fahrers hindeuten, wird auch von diesem ausgegangen, so dass kein fehlerhaftes Bevormunden des Fahrers stattfindet.

Zur konkreten Unterstützung des Fahrers existieren verschiedene Möglichkeiten in einem erkannten Schreckzustand, wobei es allgemein zweckmäßig ist, zu überprüfen, ob eine kritische Fahrsituation gegeben ist oder bevorsteht, so dass als Maßnahme insgesamt eine Fahrsituationsanalyse durchgeführt wird oder, falls durch ein anderes System, beispielsweise ein Sicherheitssystem, ohnehin ständig vorhanden, deren Ergebnisse ausgewertet werden. Fahrsituationsanalysen sind aus dem Stand der Technik bereits bekannt, insbesondere im Hinblick auf eine kritische Situation, wobei also insbesondere die Fahrsituation beschreibende Sensordaten und/oder Betriebsdaten des eigenen Kraftfahrzeugs zur Ermittlung eines Kritikalitätswerts ausgewertet werden können. Bei einem derartigen Kritikalitätswert beziehungsweise einer Eingangsgröße in einen derartigen Kritikalitätswert kann es sich beispielsweise um eine Kollisionswahrscheinlichkeit handeln, wobei jedoch im Stand der Technik bereits eine Vielzahl weiterer Möglichkeiten bekannt sind, die Kritikalität einer Fahrsituation zu beurteilen, die auch im Rahmen der vorliegenden Erfindung entsprechend eingesetzt werden können. Insbesondere im Kontext von Sicherheitssystemen, deren Funktionen vorteilhaft auch im Rahmen der vorliegenden Erfindung genutzt werden können, sind eine Vielzahl von Fahrsituationsanalysealgorithmen und Maßnahmenkriterien, die deren Ergebnisse auswerten, grundsätzlich bereits bekannt.

In einer konkreten Ausgestaltung der vorliegenden Erfindung kann vorgesehen sein, dass in einem Schreckzustand, falls keine zu einem Fahreingriff führende Bedientätigkeit des Fahrers aus Betriebsdaten ableitbar ist, eine Fahrsituationsanalyse durchgeführt wird, wobei bei Erfüllung eines Kritikalitätskriteriums wenigstens ein die Sicherheit des Kraftfahrzeugs erhöhender Sicherheitsfahreingriff ermittelt und automatisch umgesetzt wird. Wird mithin ein Schreckzustand erkannt, aber es erfolgt keine wesentliche Fahrerreaktion, kann durch eine Fahrsituationsanalyse festgestellt werden, ob das Kraftfahrzeug noch sicher fährt. Wird beispielsweise ein gefährliches Hindernis, mit dem eine Kollision droht, und/oder ein drohendes Verlassen der aktuellen Fahrspur erkannt, kann vorgesehen sein, dass das Fahrerassistenzsystem eine unterstützende Führung des Kraftfahrzeugs vornimmt, bis die Fahrsituation wieder sicher und/oder der Fahrer wieder Herr der Lage ist. Droht beispielsweise ein Auffahrunfall in einer plötzlich bremsenden Autobahnkolonne und ist der Fahrer in einem kataplexischen Zustand, also "vor Schreck gelähmt", kann das Fahrerassistenzsystem den Bremsvorgang übernehmen, bis der Fahrer selbst durch Betätigung des Bremspedals selbst ausreichend Bremsdruck aufbaut. Mithin sieht eine besonders bevorzugte Ausgestaltung der vorliegenden Erfindung vor, dass bei einer einen wenigstens die Stärke des Sicherheitsfahreingriffs erreichenden, dem Sicherheitsfahreingriff entsprechenden Bedienerfahreingriff beschreibenden Bedienaktion des Fahrers der Sicherheitsfahreingriff abgebrochen und die Fahrzeugführung wieder dem Fahrer übertragen wird. Insbesondere gilt dann auch der Schreckzustand als beendet. Dabei sei angemerkt, dass es selbstverständlich auch denkbar ist, Bedienelemente temporär für den Fahrer zu sperren, bevorzugt in dem Sinne, dass Bedienaktionen des Fahrers an den Bedienelementen, die einen negativen Einfluss auf die Kritikalität der Situation haben könnten, temporär nicht mehr in Bedienerfahreingriffe umgesetzt werden.

Eine bevorzugte Weiterbildung der Erfindung sieht vor, dass in einem Schreckzustand, falls wenigstens eine zu einem Bedienerfahreingriff führende Bedienaktion des Fahrers aus Betriebsdaten ableitbar ist, der wenigstens eine Bedienerfahreingriff beurteilt wird, wobei Bedienerfahreingriffe, die ein eine insbesondere einen ein nach oben offenes Durchführbarkeitsintervall definierenden Durchführbarkeitsschwellwert überschreitende Veränderung der Sicherheit des Kraftfahrzeugs anzeigendes Durchführbarkeitskriterium erfüllen, insbesondere bei Erkennung einer kritischen aktuellen Fahrsituation verstärkt oder anderweitig unterstützt, durchgeführt werden und Bedienereingriffe, die das Durchführbarkeitskriterium nicht erfüllen, nicht durchgeführt werden. Ist die Situation weniger kritisch, kann das Durchführbarkeitsintervall auch eine unwesentliche Verschlechterung der Sicherheit akzeptieren, so dass es als ein Toleranzintervall verstanden werden kann. Ein solches dient dabei im Wesentlichen dem Zweck, bei im Wesentlichen gleichbleibender, also nicht gefährdend verschlechternder Fahrsituation, eine Bevormundung des Fahrers weitestgehend auszuschließen. In kritischen Situationen kann der eine insbesondere deutliche Verbesserung der Sicherheit fordernde Durchführbarkeitsschwellwert als ein Sicherheitsschwellwert verstanden werden. Dieser wird also genutzt, wenn eine Mindestverbesserung der Fahrsituation zu besorgen ist. In einem solchen Fall fällt ein Toleranzintervall selbstverständlich weg, wobei allgemein gesagt werden kann, dass der Durchführbarkeitsschwellwert bevorzugt dynamisch in Abhängigkeit der Kritikalität der aktuellen Fahrsituation anpassbar ist, wobei insbesondere in Abhängigkeit der Kritikalität der aktuellen Fahrsituation das Verständnis als ein Toleranzintervall wegfallen kann und durch das Verständnis eines Sicherheitsschwellwerts ersetzt werden kann oder umgekehrt.

Bei der Bedienaktion des Fahrers wird es sich in Schreckzuständen häufig um eine ruckartige Bedienaktion handeln, wie dies bereits dargelegt wurde. Wird ein Schreckzustand festgestellt und es findet eine insbesondere ruckartige Bedienaktion statt, wird die Bedienaktion beziehungsweise der daraus folgende Bedienerfahreingriff auf Sinnhaftigkeit und Sicherheit vorausberechnet, wobei gegebenenfalls der Bedienerfahreingriff modifiziert oder unterdrückt werden kann. Es ist mithin denkbar, dem Fahrer die Fahrzeugkontrolle wenigstens teilweise so lange zu entziehen, bis der Schreckzustand beendet ist beziehungsweise die Bedienaktionen wieder korrekt der Fahrsituation angepasst sind. Weht beispielsweise eine Plastiktüte vor die Windschutzscheibe des Kraftfahrzeugs und würde eine resultierende Lenkradreaktion des Fahrers das Kraftfahrzeug außer Kontrolle bringen, so wird der Lenkbedienerfahreingriff modifiziert und/oder unterdrückt und das Fahrerassistenzsystem übernimmt temporär die Spurführung. Dies ist prinzipiell unabhängig davon, ob Sensoren des Kraftfahrzeugs die Ursache des Schreckzustands feststellen können, denn es genügt, wenn anhand der Sensordaten und/oder Betriebsdaten, die die aktuelle Fahrsituation beschreiben, ein drohender Unfall durch die Schreckreaktion erkannt werden kann und der Unfall vermieden werden kann.

Vorzugsweise kann mithin zur Beurteilung des wenigstens einen Bedienerfahreingriffs eine Fahrsituationsprädiktion unter Berücksichtigung des wenigstens einen Bedienerfahreingriffs und für die prädizierte Fahrsituation eine Fahrsituationsanalyse durchgeführt werden und/oder der wenigstens eine Bedienerfahreingriff kann mit wenigstens einem sich aus einer Fahrsituationsanalyse der aktuellen Fahrsituation ergebenden, die Sicherheit des Kraftfahrzeugs erhöhenden Sicherheitsfahreingriff verglichen werden. Dabei wird die erste Variante dieser Ausgestaltung bevorzugt, da die zweite Variante gegebenenfalls nicht alle Möglichkeiten zur Erhöhung der Sicherheit des Kraftfahrzeugs abdeckt. Es wird mithin die Auswirkung des Bedienerfahreingriffs prädiziert und entsprechend über dessen gegebenenfalls modifizierte Durchführung oder nicht Durchführung entschieden. Somit kann verhindert werden, dass durch eine Schreckreaktion des Fahrers eine kritische Fahrsituation herbeigeführt wird.

Mit besonderem Vorteil kann dann, wenn der Bedienerfahreingriff nicht durchgeführt wird, insbesondere jedoch dennoch eine kritische Fahrsituation vorliegt, mithin bei Erfüllung eines Kritikalitätskriteriums, vorgesehen sein, dass wenigstens ein beziehungsweise der die Sicherheit des Kraftfahrzeugs erhöhende Sicherheitsfahreingriff ermittelt und automatisch umgesetzt wird. Analog zum Fall, dass kein Bedienerfahreingriff vorliegt, kann also dann, wenn ein weiteres beziehungsweise das bereits diskutierte Kritikalitätskriterium erfüllt ist, seitens des Fahrerassistenzsystems eine Erhöhung beziehungsweise Aufrechterhaltung der Sicherheit des Kraftfahrzeugs durch entsprechende Sicherheitsfahreingriffe erfolgen. Auch in diesem Kontext ist es besonders bevorzugt, wenn bei einer einen wenigstens die Stärke des Sicherheitsfahreingriffs erreichenden, dem Sicherheitsfahreingriff entsprechenden Bedienerfahreingriff beschreibenden Bedienaktion des Fahrers der Sicherheitsfahreingriff abgebrochen und die Fahrzeugführung wieder dem Fahrer übertragen wird. Wie bereits bezüglich des Vorliegens keiner Bedienerfahraktion erläutert wurde, gilt dann insbesondere auch der Schreckzustand als beendet.

Allgemein kann also gesagt werden, dass, wie bereits dargelegt wurde, bei nicht sinnhaften und/oder die Sicherheit des Kraftfahrzeugs reduzierenden Bedienaktionen der resultierende Bedienerfahreingriff modifiziert oder unterdrückt werden kann, während bei sinnvollen, sicheren, insbesondere ruckartigen Bedienaktionen diese Bedienaktion vorteilhafterweise, insbesondere bei Vorliegen einer kritischen Fahrsituation, auch unterstützt werden kann. Rollt beispielsweise ein Ball auf die Fahrbahn, der Fahrer sieht Kinder, erschreckt und zieht den Fuß vom Gas, kann vorgesehen sein, dass noch bevor der Fahrer das Bremspedal erreicht, bereits Bremsdruck aufgebaut wird beziehungsweise das Bremssystem für die bevorstehende Bremsung vorkonditioniert wird. Tritt der Fahrer dann aktiv das Bremspedal, kann die Bremswirkung verstärkt werden. Hierdurch können wertvolle Meter Bremsweg eingespart werden. Erkennt der Fahrer, dass sein Schreck unbegründet war und gibt wieder Gas, wird die Bremse gelöst und es wird der Bedienaktion des Fahrers gefolgt.

Wie bereits angedeutet wurde, kann es im Rahmen der vorliegenden Erfindung besonders zweckmäßig sein, wenn das Kraftfahrzeug ferner ein Sicherheitssystem aufweist, das zur Durchführung von Fahrsituationsanalysen ausgebildet ist, deren Ergebnisse dem Fahrerassistenzsystem zur Verfügung gestellt werden. Über die Fahrsituationsanalyse hinaus können selbstverständlich auch weitere Funktionen von Sicherheitssystemen, beispielsweise das Ermitteln von Sicherheitsfahreingriffen, durch das Fahrerassistenzsystem mit genutzt werden, wenn das Kraftfahrzeug ein geeignetes Sicherheitssystem aufweist. Mithin werden die Funktionen des Sicherheitssystems einem weiteren Nutzen im Rahmen des erfindungsgemäßen Schrecküberbrückungs-Fahrerassistenzsystems zugeführt.

Neben dem Verfahren betrifft die Erfindung auch ein Kraftfahrzeug, aufweisend ein Fahrerassistenzsystem mit einem zur Durchführung des erfindungsgemäßen Verfahrens ausgebildeten Steuergerät. Sämtliche Ausführungen bezüglich des erfindungsgemäßen Verfahrens lassen sich analog auf das erfindungsgemäße Kraftfahrzeug übertragen, mit welchem mithin auch die bereits genannten Vorteile erhalten werden können.

Weitere Vorteile und Einzelheiten der vorliegenden Erfindung ergeben sich aus den im folgenden beschriebenen Ausführungsbeispielen sowie anhand der Zeichnung. Dabei zeigen:
- Fig. 1: eine Skizze zum Funktionsprinzip des erfindungsgemäßen Verfahrens, und
- Fig. 2: ein erfindungsgemäßes Kraftfahrzeug.

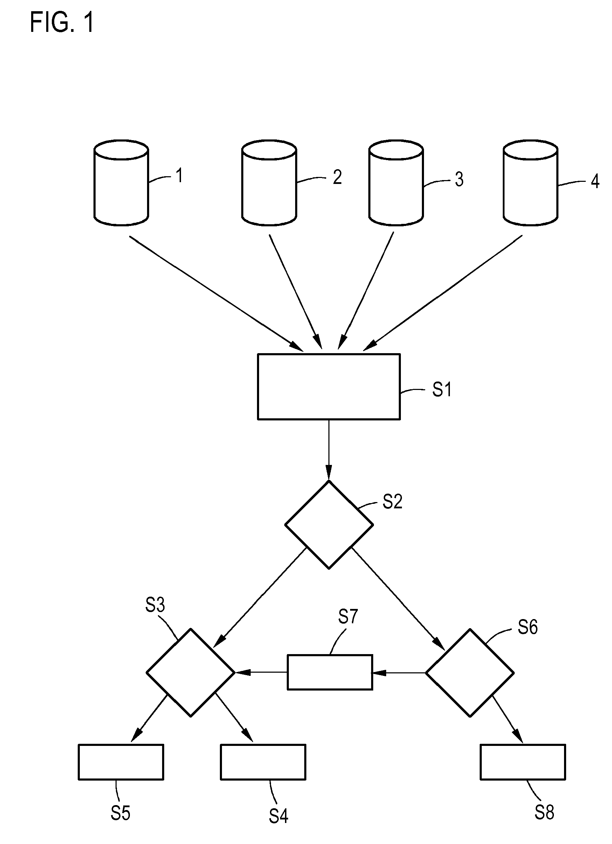

Das in Fig. 1 erläuterte erfindungsgemäße Verfahren wird durch ein Steuergerät eines Fahrerassistenzsystems durchgeführt und dient dazu, in einem Schreckzustand des Fahrers die "Schrecksekunde" unterstützend dahingehend zu überbrücken, dass die Sicherheit des Kraftfahrzeugs aufrechterhalten oder erhöht wird. Hierzu wird in einem Schritt S1 in einem Schreckkriterium überprüft, ob ein Schreckzustand des Fahrers vorliegt, wobei eine Mehrzahl von Teilkriterien berücksichtigt wird, von denen das wichtigste die Auswertung von Bilddaten 1 einer Innenraumkamera des Kraftfahrzeugs betrifft, die auf den Fahrer gerichtet ist. Bildverarbeitungsalgorithmen werden eingesetzt, um anhand des Gesichts und der Körperhaltung Merkmale des Schreckzustands festzustellen und den Fahrer als erschreckt zu klassifizieren. Dieses Teilkriterium geht als ein wesentlicher Faktor in das das Vorliegen eines Schreckzustands beschreibende Schreckkriterium ein.

In einem weiteren Teilkriterium werden Betriebsdaten 2 des Kraftfahrzeugs ausgewertet, die sich auf das Vorliegen einer ruckartigen Bedienaktion des Fahrers beziehen. Ist ein Fahrer erschreckt, reagiert er meist mit einer ruckartigen Bedienaktion, die mithin ein Indiz darstellt, dass ein Schreckzustand gegeben ist, vorliegend jedoch nur gemeinsam mit anderen Teilkriterien zur Detektion eines Schreckzustands führen kann, da es durchaus auch denkbar ist, dass ruckartige Bedienaktionen vom Fahrer gewollt sind. Die Betriebsdaten 2 können dabei insbesondere die Betätigung von Pedalen und dem Lenkrad beschreiben. Ruckartig ist eine Bedienaktion dann, wenn eine große Veränderung in kurzer Zeit gegeben ist, was beispielsweise über einen Gradienten, gegebenenfalls gemeinsam mit einer Mindeststärke, beschrieben werden kann.

In einem weiteren Teilkriterium wird, teilweise unter Zugriff auf Funktionen eines Sicherheitssystems des Kraftfahrzeugs, eine Fahrsituationsanalyse dahingehend durchgeführt, ob eine Schrecksituation, mithin eine Ursache für einen Schreckzustand, aufgefunden werden kann. Die hierauf bezogenen Eingangsdaten 3 setzen sich aus Sensordaten über das Umfeld des Kraftfahrzeugs (Umfelddaten), Sensordaten über den Innenraum des Kraftfahrzeugs (Innenraumdaten) und Betriebsdaten des Kraftfahrzeugs zusammen. Vorzugsweise wird dabei die Fahrsituationsanalyse bezogen auf die Verkehrssituation, also das Umfeld, durch Funktionen des Sicherheitssystems des Kraftfahrzeugs realisiert. Für die Innenraum-Fahrsituationsanalyse werden beispielsweise Bilddaten hinsichtlich heruntergefallender Zigaretten und dergleichen sowie akustische Daten hinsichtlich plötzlicher lauter Geräusche im Innenraum ausgewertet. Wird die aktuelle Fahrsituation als Schrecksituation klassifiziert, ist ein Hinweis auf einen Schreckzustand gegeben.

Schließlich werden in einem weiteren Teilkriterium auch Betriebsdaten 4 eines Fahrzeugführungssystems zur Unterstützung des Fahrers bei der Querund Längsführung des Kraftfahrzeugs dahingehend ausgewertet, ob, insbesondere nach einer längeren Betriebsphase, eine Fahrübernahmeaufforderung erfolgt. Auch diese kann einen Fahrer, wenn er gerade abgelenkt war, erschrecken.

Wird also im Schritt S1 festgestellt, dass ein Schreckzustand vorliegt, soll dieser den Fahrer unterstützend und die Sicherheit des Kraftfahrzeugs erhaltend oder gar erhöhend überbrückt werden, was, wie dargelegt werden wird, weitestgehend auf aktuellen beziehungsweise prädiktiven Fahrsituationsanalysen basiert, die zweckmäßigerweise wiederum durch das erwähnte Sicherheitssystem beziehungsweise dessen Funktionen realisiert werden können.

In einem Schritt S2 wird dabei zunächst unterschieden, ob eine Bedienaktion des Fahrers vorliegt, die zu einem Bedienerfahreingriff führen würde. Ist dies nicht der Fall, wird in einem Schritt S3 in einer Fahrsituationsanalyse anhand eines Kritikalitätskriteriums entschieden, ob ein Sicherheitsfahreingriff seitens des Fahrerassistenzsystems erforderlich sein könnte, um die Sicherheit des Kraftfahrzeugs aufrechtzuerhalten oder in äußerst kritischen Situationen gar zu erhöhen. Ist das Sicherheitskriterium erfüllt, liegt also eine kritische Situation vor, werden in einem Schritt S4 Sicherheitsfahreingriffe, die die Sicherheit des Kraftfahrzeugs erhöhen, ermittelt und ausgeführt. Wird währenddessen festgestellt, dass der Fahrer nun selbst wieder aktiv wird, wird überprüft, ob dessen Bedienaktionen zu den Sicherheitsfahreingriffen passen, mithin diesen entsprechen. Erreicht die Stärke eines durch eine Bedienaktion angeforderten Bedienerfahreingriffs die eines entsprechenden Sicherheitsfahreingriffs, wird der Schreckzustand als beendet erklärt und die Fahrzeugführung wieder vollständig dem Fahrer übergeben. War dieser beispielsweise kurzzeitig vor Schreck gelähmt, können mit dem Fahrerassistenzsystem wertvolle Sekunden Reaktionszeit gewonnen werden, in dem die notwendige Reaktion in einer kritischen Situation bereits vorbereitet/begonnen wird, ehe der Fahrer reagiert und diese dann entsprechend zu Ende bringen kann.

Wird im Schritt S3 festgestellt, dass keine kritische Situation vorliegt, wird in einem Schritt S5 weiter überwacht, ob der Schreckzustand beseitigt ist, wobei bis dahin Bedienelemente für den Fahrer gesperrt werden können, beispielsweise das Lenkrad und die Fahrpedale, es jedoch auch denkbar ist, dass bei zeitversetzt während des Schreckzustands noch auftretenden Bedienaktionen des Fahrers wieder zu Schritt S2 verzweigt wird.

Wird im Schritt S2 festgestellt, dass der Fahrer eine insbesondere ruckartige Bedienaktion durchgeführt hat, vergleiche auch das oben diskutierte zweite Teilkriterium, werden die sich hieraus ergebenden Bedienerfahreingriffe in einem Schritt S6 beurteilt, wobei vorliegend eine prädiktive Fahrsituationsanalyse erfolgt. Das bedeutet, es wird die Fahrsituation prädiziert, die sich bei Durchführung des Bedienerfahreingriffs ergeben würde, und diese wird bezüglich ihrer Kritikalität bewertet. Die sich ergebende prädizierte Kritikalität wird zusammen mit der Kritikalität der aktuellen Fahrsituation, die ohnehin, beispielsweise als Kritikalitätswert, ermittelt wird, in einem Durchführbarkeitskriterium verglichen.

Das Durchführbarkeitskriterium ist dynamisch anpassbar, und zwar in Abhängigkeit von der Kritikalität der aktuellen Fahrsituation. Ist die aktuelle Fahrsituation beispielsweise unkritisch, kann es ausreichend sein, dass die Sicherheit innerhalb eines Toleranzintervalls gleichbleibt. Ist jedoch eine kritische Situation gegeben, mithin beispielsweise das in Schritt S3 genannte Sicherheitskriterium erfüllt, wird überprüft, ob der Bedienerfahreingriff die Sicherheit um einen Sicherheitsschwellwert erhöht. Dann fällt selbstverständlich das Toleranzintervall weg. Mit anderen Worten kann auch formuliert werden, dass das Durchführbarkeitskriterium einen dynamisch in Abhängigkeit von der Kritikalität der aktuellen Fahrsituation anpassbaren, ein nach oben offenes Durchführbarkeitsintervall definierenden Durchführbarkeitsschwellwert für die Veränderung der Sicherheit der Fahrsituation nutzt.

Ist das Durchführbarkeitskriterium nicht erfüllt, wird in einem Schritt S7 die Bedienerfahraktion unterdrückt oder zumindest abschwächend modifiziert. Dann werden auch für diesen Fall die Schritte S3 und S4 durchgeführt, so dass bei einer sicherheitskritischen Situation Maßnahmen zur Erhöhung der Sicherheit ergriffen werden können.

Ist das Durchführbarkeitskriterium im Schritt S6 jedoch erfüllt, wird in einem Schritt S8 die Bedienerfahraktion durchgeführt, wobei dann, wenn ein Forcierungsschwellwert für den Kritikalitätswert überschritten ist und/oder die Fahrsituationsanalyse einen deutlich stärkeren Fahreingriff empfohlen hätte, der Bedienerfahreingriff sogar noch unterstützt und/oder verstärkt wird. Hat sich der Fahrer in seiner Schreckreaktion also intuitiv richtig entschieden, wird die entsprechende Aktion unterstützt.

In jedem Fall wird überprüft, ob der Schreckzustand beendet und die kritische Situation beseitigt ist, bevor das Fahrerassistenzsystem wieder in den Überwachungsbetriebsmodus zurückkehrt.

Neben den hier erwähnten Fahreingriffen sind auch andere Maßnahmen möglich, beispielsweise eine Anpassung von Betriebsparametern zur Vorkonditionierung eines Fahrzeugsystems auf einen antizipierten Bedienerfahreingriff, eine zumindest teilweise Unterdrückung von Bedienaktionen des Fahrers und dergleichen.

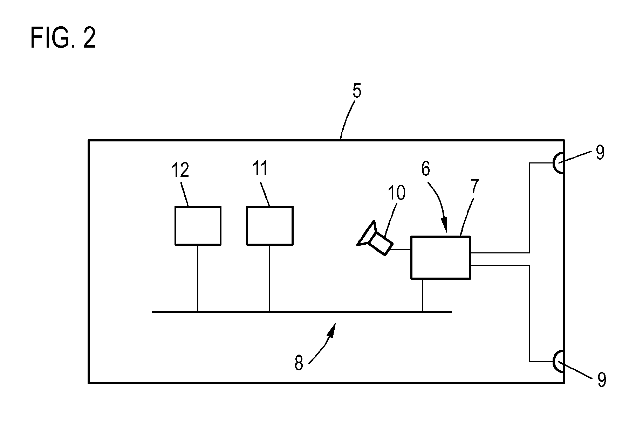

Fig. 2 zeigt eine Prinzipskizze eines erfindungsgemäßen Kraftfahrzeugs 5. Dieses weist das beschriebene Fahrerassistenzsystem 6 zur Schreckerkennung und Unterstützung in Schrecksituationen auf. Das Fahrerassistenzsystem 6 umfasst ein Steuergerät 7, das zur Durchführung des erfindungsgemäßen Verfahrens ausgebildet ist.

Dabei kann das Steuergerät 7 über ein Bussystem 8 des Kraftfahrzeugs 5 Sensordaten von Sensoren des Kraftfahrzeugs 5 und Betriebsdaten anderer Fahrzeugsysteme des Kraftfahrzeugs erhalten. Beispielhaft sind vorliegend zwei Umfeldsensoren 9 und eine Innenraumkamera 10 als Sensoren dargestellt, wobei das Kraftfahrzeug 5 üblicherweise weitere Sensoren umfassen wird.

Gezeigt ist ferner ein Fahrzeugführungssystem 11, von dem das Steuergerät 7 Betriebsdaten, die eine anliegende Fahrübernahmeaufforderung anzeigen, erhalten kann, sowie ein Sicherheitssystem 12, dessen Funktion teilweise vom Fahrerassistenzsystem 6 mitgenutzt werden können.

## Patentansprüche

1. Verfahren zum Betrieb eines Fahrerassistenzsystems (6) eines Kraftfahrzeugs (5),
**dadurch gekennzeichnet,**
**dass** durch ein den Fahrer und/oder die Fahrsituation betreffende Sensordaten und/oder Betriebsdaten (2, 4) des Kraftfahrzeugs (5) auswertendes Schreckkriterium ein Schreckzustand des Fahrers des Kraftfahrzeugs (5) erkannt wird, wobei bei Vorliegen eines Schreckzustandes wenigstens eine die Sicherheit des Fahrzeugbetriebs erhöhende und/oder aufrechterhaltende Maßnahme durchgeführt wird, wobei in einem Schreckzustand, falls wenigstens eine zu einem Bedienerfahreingriff führende Bedienaktion des Fahrers aus Betriebsdaten (2) ableitbar ist, der wenigstens eine Bedienerfahreingriff beurteilt wird, wobei Bedienerfahreingriffe, die ein eine insbesondere einen ein nach oben offenes Durchführbarkeitsintervall definierenden Durchführbarkeitsschwellwert überschreitende Veränderung der Sicherheit des Kraftfahrzeugs (5) anzeigendes Durchführbarkeitskriterium erfüllen, insbesondere bei Erkennung einer kritischen aktuellen Fahrsituation verstärkt oder anderweitig unterstützt, durchgeführt werden und Bedienereingriffe, die das Durchführbarkeitskriterium nicht erfüllen, nicht durchgeführt werden.

2. Verfahren nach Anspruch 1,
**dadurch gekennzeichnet,**
**dass** als Maßnahme wenigstens ein Betriebsparameter wenigstens eines Fahrzeugsystems zur Unterstützung des Beseitigens und/oder Wahrnehmens einer kritischen Fahrsituation angepasst wird und/oder ein die Sicherheit des Kraftfahrzeugs (5) erhöhender und/oder aufrechterhaltender Fahreingriff vorgenommen wird und/oder ein fahrerseitig aufgrund einer Bedieneingabe erfolgender Fahreingriff unterdrückt oder modifiziert wird und/oder wenigstens ein Bedienelement des Kraftfahrzeugs (5) für Bedieneingaben des Fahrers gesperrt wird.

3. Verfahren nach Anspruch 1 oder 2,
**dadurch gekennzeichnet,**
**dass** durch das Schreckkriterium als Sensordaten die Bilddaten (1) einer auf das Gesicht eines Fahrers gerichteten Innenraumkamera (10) ausgewertet werden, insbesondere unter Benutzung eines ein Gesicht als erschreckt klassifizierenden und/oder kritische Situationen und/oder Zustände des Fahrers erkennenden Bildverarbeitungsalgorithmus.

4. Verfahren nach einem der vorangehenden Ansprüche,
**dadurch gekennzeichnet,**
**dass** durch das Schreckkriterium als Sensordaten die Fahrsituation innerhalb und/oder außerhalb des Kraftfahrzeugs (5) im vom Fahrer wahrnehmbaren Bereich beschreibende und/oder als Betriebsdaten als das Ergebnis einer Fahrsituationsanalyse gewonnene Situationsdaten ausgewertet werden.

5. Verfahren nach einem der vorangehenden Ansprüche,
**dadurch gekennzeichnet,**
**dass** durch das Schreckkriterium als Betriebsdaten (4) eine aktuell auszugebende Fahrübernahmeaufforderung wenigstens eines zur wenigstens teilweise automatischen Quer- und/oder Längsführung des Kraftfahrzeugs (5) ausgebildeten Fahrzeugführungssystems (11) beschreibende Fahrübernahmedaten ausgewertet werden.

6. Verfahren nach einem der vorangehenden Ansprüche,
**dadurch gekennzeichnet,**
**dass** als ein Teilkriterium des Schreckkriteriums, dessen Erfüllung nicht alleine zur Erfüllung des Schreckkriteriums ausreicht, Betriebsdaten (2) des Kraftfahrzeugs (5) auf das Vorliegen einer ruckartigen Bedienaktion seitens des Fahrers überprüft werden.

7. Verfahren nach einem der vorangehenden Ansprüche,
**dadurch gekennzeichnet,**
**dass** in einem Schreckzustand, falls keine zu einem Fahreingriff führende Bedientätigkeit des Fahrers aus Betriebsdaten (2) ableitbar ist, eine Fahrsituationsanalyse durchgeführt wird, wobei bei Erfüllung eines Kritikalitätskriteriums wenigstens ein die Sicherheit des Kraftfahrzeugs (5) erhöhender Sicherheitsfahreingriff ermittelt und automatisch umgesetzt wird.

8. Verfahren nach Anspruch 7,
**dadurch gekennzeichnet,**
**dass** bei einer einen wenigstens die Stärke des Sicherheitsfahreingriffs erreichenden, dem Sicherheitsfahreingriff entsprechenden Bedienerfahreingriff beschreibenden Bedienaktion des Fahrers der Sicherheitsfahreingriff abgebrochen und die Fahrzeugführung wieder dem Fahrer übertragen wird.

9. Verfahren nach einem der vorangehenden Ansprüche,
**dadurch gekennzeichnet,**
**dass** der Durchführbarkeitsschwellwert in Abhängigkeit von einer in einer Fahrsituationsanalyse der aktuellen Fahrsituation gewonnenen Kritikalität der aktuellen Fahrsituation dynamisch angepasst wird.

10. Verfahren nach einem der vorangehenden Ansprüche,
**dadurch gekennzeichnet,**
**dass** zur Beurteilung des wenigstens einen Bedienerfahreingriffs eine Fahrsituationsprädiktion unter Berücksichtigung des wenigstens einen Bedienerfahreingriffs und für die prädizierte Fahrsituation eine Fahrsituationsanalyse durchgeführt wird und/oder der wenigstens eine Bedienerfahreingriff mit wenigstens einem sich aus einer Fahrsituationsanalyse der aktuellen Fahrsituation ergebenden, die Sicherheit des Kraftfahrzeugs (5) erhöhenden Sicherheitsfahreingriff verglichen wird.

11. Verfahren nach einem der vorangehenden Ansprüche,
**dadurch gekennzeichnet,**
**dass** bei Nichtdurchführung wenigstens eines Bedienerfahreingriffs bei Erfüllung eines bzw. des Kritikalitätskriteriums wenigstens ein bzw. der die Sicherheit des Kraftfahrzeugs (5) erhöhender Sicherheitsfahreingriff ermittelt und automatisch umgesetzt wird.

12. Verfahren nach Anspruch 11,
**dadurch gekennzeichnet**,
bei einer einen wenigstens die Stärke des Sicherheitsfahreingriffs erreichenden, dem Sicherheitsfahreingriff entsprechenden Bedienerfahreingriff beschreibenden Bedienaktion des Fahrers der Sicherheitsfahreingriff abgebrochen und die Fahrzeugführung wieder dem Fahrer übertragen wird.

13. Verfahren nach einem der vorangehenden Ansprüche,
**dadurch gekennzeichnet,**
**dass** das Kraftfahrzeug (5) ferner ein Sicherheitssystem (12) aufweist, das zur Durchführung von Fahrsituationsanalysen ausgebildet ist, deren Ergebnisse dem Fahrerassistenzsystem (6) zur Verfügung gestellt werden.

14. Kraftfahrzeug (5), aufweisend ein Fahrerassistenzsystem (6) mit einem zur Durchführung eines Verfahrens nach einem der vorangehenden Ansprüche ausgebildeten Steuergerät (7).
